(19) **Europäisches Patentamt**

**European Patent Office**

**Office européen des brevets**

(11) **EP 1 055 949 B1**

(12) **FASCICULE DE BREVET EUROPEEN**

(45) Date de publication et mention
de la délivrance du brevet:
**09.11.2005   Bulletin 2005/45**

(51) Int Cl.⁷: **G02B 26/08**

(21) Numéro de dépôt: **00401459.3**

(22) Date de dépôt: **25.05.2000**

(54) **Miroir à membrane déformable**

Spiegel mit deformierbarer Membran

Mirror with deformable membrane

(84) Etats contractants désignés:
**DE FR GB IT**

(30) Priorité: **27.05.1999   FR 9906709**

(43) Date de publication de la demande:
**29.11.2000   Bulletin 2000/48**

(73) Titulaire: **Sagem SA**
**75015 Paris (FR)**

(72) Inventeurs:
  • **Gilles, Robert**
    **75001 Paris (FR)**
  • **Babadjian, Lionel**
    **77144 Montevrain (FR)**
  • **Spirkovitch, Serge**
    **37500 Ligne (FR)**
  • **Carel, Jean-Louis**
    **78140 Velizy (FR)**
  • **Coville, Arnaud**
    **92210 Saint-Cloud (FR)**
  • **Herriau, Jean-Pierre**
    **91440 Bures sur Yvette (FR)**

(74) Mandataire: **Schrimpf, Robert et al**
**Cabinet Regimbeau**
**20, rue de Chazelles**
**75847 Paris cedex 17 (FR)**

(56) Documents cités:
**EP-A- 0 046 873**          **US-A- 5 022 745**
**US-A- 5 774 252**          **US-A- 5 822 110**

EP 1 055 949 B1

**Description**

La présente invention est relative aux miroirs à membrane déformable.

Les miroirs à membrane déformable sont désormais classiquement connus.

Ces miroirs, en modifiant la géométrie de leur surface réfléchissante sous l'action d'une commande extérieure, permettent de transformer certaines caractéristiques du faisceau réfléchi pour réaliser, par exemple, un changement de direction, une modification spatiale de la surface d'onde, un déphasage, etc..

Les miroirs à membrane déformable trouvent des applications dans de nombreux domaines (astronomie, viseurs optroniques, ophtalmologie, interférométrie et holographie, imagerie en milieux turbides, etc.) où ils peuvent être utilisés pour réaliser des fonctions variées et notamment pour réaliser des alignements optiques (micro-positionnement, harmonisation d'axes optiques...), des micro-balayages, des stabilisations de faisceaux, des micro focalisation / défocalisation, des corrections de fronts d'onde (aberrations optiques, turbulence, anamorphose de faisceaux...), des décalages de phase, etc...

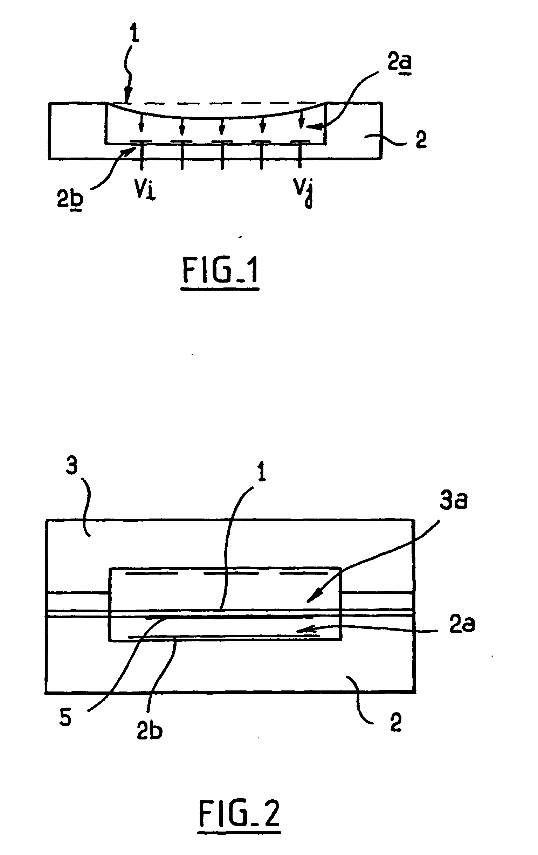

Une structure connue de composant miroir à membrane déformable est représentée sur la figure 1.

Le miroir représenté sur cette figure 1 comporte une membrane 1 métallisée portée par un substrat 2 qui présente un évidement 2a. La membrane 1 ferme ledit évidement 2a et le fond dudit évidement 2a porte, au droit de la membrane 1, un réseau d'électrodes de commande 2b.

La face métallisée de la membrane 1 - qui est la face de ladite membrane qui n'est pas en regard de l'évidement 2a - est maintenue à un potentiel neutre, tandis que des potentiels de commande Vi, Vj sont appliqués aux différentes électrodes 2b, pour générer sur la membrane des forces électrostatiques qui la déforme.

Les membranes métallisées sont habituellement en nitrure de silicium et les composants formant miroir à membrane déformable sont généralement réalisés par les techniques classiquement connues et utilisées pour la fabrication de circuits intégrés à base de Si3 N4 et notamment par dépôt de couches minces, photolithogravure, usinage ionique ou chimique, etc...

Cette approche technologique présente toutefois un certain nombre de limitations :

1) la dimension maximum des miroirs est limitée pour des raisons de fragilité de la membrane à un diamètre de l'ordre de 1cm, voire 1,5cm,
2) la géométrie du miroir est imposée par la structure cristallographique du Si3 N4 et est nécessairement du type " carré " aux bords arrondis,
3) la tension de commande, nécessaire à l'établissement des forces électrostatiques, est élevée, typiquement 200 à 300 V, en raison de la forte tension mécanique de la membrane de Si3 N4,

4) le déplacement de la membrane ne s'effectue que dans un demi espace en raison de l'utilisation d'une électrode unique.

L'invention a pour buts de pallier ces inconvénients.

On connaît déjà par US 5 022 745 un miroir à membrane déformable comportant une membrane de silicium accrochée à deux parties de couche d'oxyde et dont au moins une face est métallisée, ce substrat présentant deux évidements refermés l'un sur l'autre de part et d'autre de la membrane métallisée, ledit miroir comportant également au moins deux électrodes pour la commande de la déformation de la membrane, ces deux électrodes étant disposées de part et d'autre de la membrane sur les portions qui définissent les fonds des évidements, celle de ces portions qui est directement en regard de la face métallisée de la membrane étant transparente.

L'invention propose un procédé pour réaliser un miroir de ce type dont la membrane de silicium est maintenue par deux parties de couche de silicium.

L'invention propose également un procédé pour la réalisation d'un miroir du type précité à partir d'une tranche de silicium à couche oxydée intégrée.

Selon ce procédé, on met en oeuvre les différentes étapes selon la revendication 1.

On notera que le silicium et les technologies relatives au silicium à oxyde intégré permettent de réaliser des membranes de formes quelconques (circulaire, carrée, hexagonale voir plus complexe), avec une très bonne précision, tout en autorisant des diamètres de miroir importants.

Avantageusement, une portion de substrat est réalisée par gravure d'une tranche de silicium avec couche d'oxyde enterrée (SOI).

Ceci permet le contrôle précis de l'épaisseur de l'entrefer entre la membrane et la première électrode (réduction des tensions de commande et amélioration de la possibilité de répété le procédé) ; ceci contribue également à permettre de réaliser - du fait de la faible épaisseur à graver - des géométries de membranes variées (pas de dépouille lors de la gravure).

Ce procédé est avantageusement complété par les différentes caractéristiques suivantes :

- on perce une ouverture à travers la première portion de substrat avant l'assemblage de la deuxième portion de substrat ;
- une portion de substrat est une lame en verre et son assemblage se fait par soudure anodique verre/silicium.
- le dopage est de type P+.
- la tranche de silicium à couche oxydée intégrée présente une épaisseur de l'ordre de 520 μm et une couche oxydée enterrée d'une épaisseur de 0,5 μm, située à une profondeur de 20 μm.

L'invention propose également un miroir du type précité.

Selon une caractéristique du miroir proposé par l'invention, une électrode de commande portée par ladite portion est une électrode transparente.

Une telle structure à l'avantage de permettre de réaliser des déformées de signe quelconque et de doubler l'amplitude de déformation à tension de commande constante, tout en présentant une très bonne qualité de réflexion.

Selon une autre caractéristique, la membrane est une membrane de silicium et plus particulièrement une membrane de silicium d'une épaisseur de l'ordre de 3 µm ou inférieure.

Une telle membrane de silicium présente de faibles tensions mécaniques ce qui permet de diminuer les tensions de commande, par exemple à des valeurs de 100 à 150 V au lieu de tensions de 250 à 300 V pour des miroirs à base de nitrure de silicium.

Ils permettent en outre des diamètres de miroirs pouvant atteindre 3 cm ou plus.

Selon une autre caractéristique encore, une portion de fond du côté opposé à la face métallisée de la membrane porte un empilement monolithique qui comprend une électrode transparente et une couche de photoconducteur, ledit empilement étant apte à être commandé de façon optique pour générer sur la membrane un champ électrostatique de profil complexe alors que les électrodes de part et d'autre de la membrane sont alimentées par une source d'alimentation unique.

Avec une telle structure, il est ainsi possible par commande optique de générer un réseau d'électrodes temporellement dynamique.

Les miroirs selon l'invention sont avantageusement complétés par les différentes caractéristiques suivantes prises seules ou selon toutes leurs combinaisons techniquement possibles :

- une portion de substrat qui porte une électrode transparente est une lame en verre ;
- une électrode transparente est en oxyde d'indium et d'étain ;
- une électrode transparente est recouverte par une couche anti-reflet ;
- un soufflet est gravé à la périphérie de la membrane ;
- le fond directement en regard d'une face métallisée de la membrane présente quant à lui une électrode unique s'étendant de façon uniforme sur sa surface, tandis que le fond d'un évidement opposé à une face métallisée de la membrane porte un réseau d'électrodes ;
- les électrodes du réseau ne sont pas uniformes et sont optimisées en fonction des déformations que doit pouvoir subir le miroir ;
- le réseau d'électrodes comporte une électrode centrale de forme carrée entourée de douze électrodes périphériques également de forme carrée ;

- le miroir comporte des moyens pour multiplexer temporellement les commandes des différentes électrodes.

D'autres caractéristiques et avantages de l'invention ressortiront encore de la description qui suit. Cette description est purement illustrative et non limitative et doit être lue en regard des dessins annexés sur lesquels :

- la figure 1 est une représentation schématique en coupe d'un miroir à membrane déformable connu dans l'état de la technique ;
- la figure 2 est une représentation schématique en coupe d'un composant conforme à un mode de réalisation possible de l'invention ;
- les figures 3a à 3g illustrent différentes étapes de réalisation du composant de la figure 2 ;
- les figures 4a à 4h illustrent différents types de déformation possibles pour un miroir conforme à un mode de réalisation possible de l'invention ;
- la figure 5 est une représentation schématique d'une configuration optimisée pour un réseau d'électrodes d'un miroir conforme à un mode de réalisation possible de l'invention ;
- les figures 6a à 6c illustrent trois étapes d'un procédé de réalisation possible pour l'invention ;
- la figure 7a illustre schématiquement la commande optique d'une électrode d'un miroir conforme à un mode de réalisation possible de l'invention ;
- la figure 7b illustre la conductivité spatiale du photoconducteur du composant représenté sur la figure 7a.

On a représenté sur la figure 2 un composant conforme à un mode de réalisation possible de l'invention.

Ce composant comporte une membrane 1 qui s'étend entre les évidements 2a, 3a de deux lames de verre 2 et 3 qui sont refermées l'une sur l'autre.

La lame 2 porte une électrode unique 2b qui s'étend dans le fond de son évidement 2a, au droit de la membrane 1.

La lame 3 porte, dans le fond de son évidement 3a, au droit de la membrane 1, un réseau d'électrodes 3b. Sur sa face en regard de l'électrode 2b, la membrane 1 porte une métallisation 5.

Cette membrane 1 est d'une épaisseur de 3 µm et est réalisée de la façon qui va maintenant être décrite en référence aux figures 3a à 3g.

On part initialement d'une tranche 6 de silicium à couche oxydée intégrée (SOI ou "Silicon on insulator" selon la terminologie anglo-saxonne) (figure 3a).

Cette tranche 6 présente par exemple les caractéristiques dimensionnelles suivantes : diamètre de l'ordre de 25 mm ou plus ; épaisseur totale de l'ordre de 520 µm ; couche oxydée enterrée (référencée par 7 sur les figures) d'une épaisseur de 0,5 µm et est située à une profondeur de 20 μm.

Dans une première étape, on dope (p+) la face de la tranche 6 située du côté de la couche 7 enterrée, la couche 8 dopée ainsi réalisée étant destinée à définir la membrane 1 de 3 μm d'épaisseur, dans la suite du procédé. Cette même face est ensuite métallisée, par exemple par évaporation d'une couche d'aluminium ou d'argent, afin d'obtenir la fonction miroir.

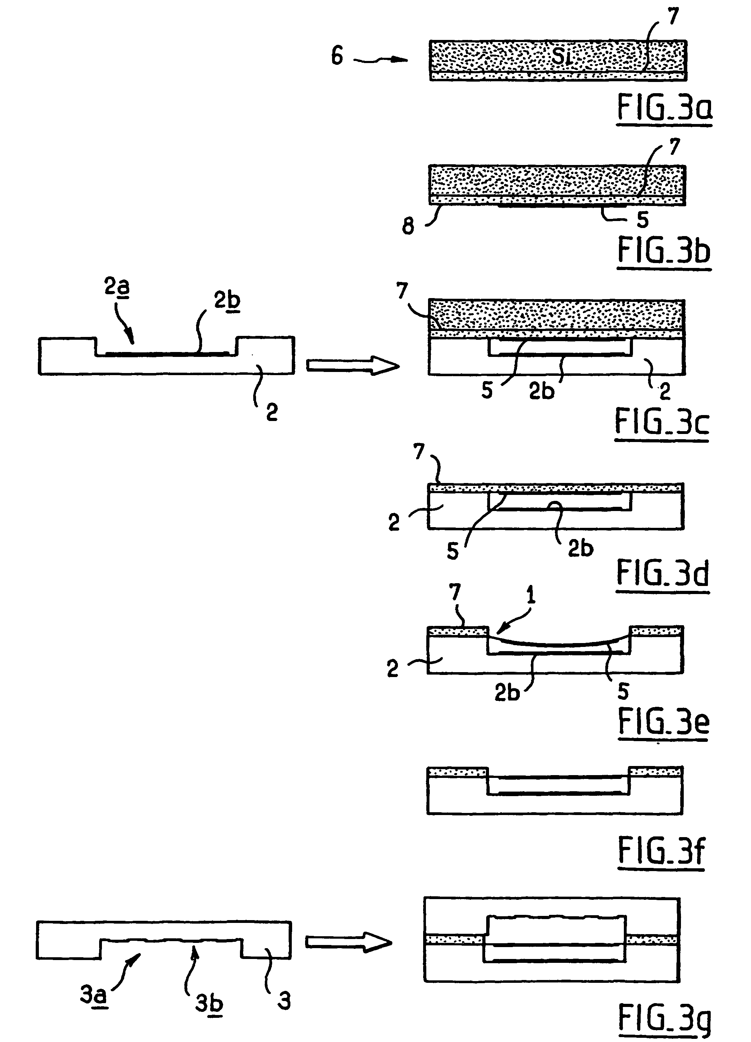

Le composant alors obtenu est celui illustré sur la figure 3b.

Puis, on assemble sur la tranche de SOI ainsi métallisée la lame 2 qui a été préalablement préparée et qui porte l'électrode 2b au fond de son évidement 2a (figure 3c). L'assemblage se fait par soudure anodique verre/silicium sur la couche de Si qui porte la métallisation 5.

La préparation de la lame 2 se fait de la façon suivante.

L'évidement 2a est réalisé par gravure chimique. Il est typiquement d'une hauteur de l'ordre de 50 μm. La gravure de cet évidement est préférentiellement réalisée avec une précision inférieure au μm.

On notera que la lame 2 (de même que la lame 3) est avantageusement une lame en silicium avec couche d'oxyde enterrée, ce qui permet une grande précision de gravure.

L'électrode 2b déposée au fond de cet évidement 2a est optiquement transparente et est, par exemple, en oxyde d'indium et d'étain (ITO). Elle est par exemple déposée sous vide par évaporation ou par pulvérisation cathodique.

Afin de simplifier la commande électrique et aussi pour ne pas affecter la qualité de la propagation optique, cette contre-électrode 2a n'est pas sous-divisée et est constituée par un couche déposée de façon uniforme sur sensiblement l'ensemble du fond de l'évidement 2a.

Après avoir assemblé la lame 2 sur la tranche de SOI, on supprime, dans une étape suivante (figure 3d) la couche de silicium la plus épaisse, c'est à dire la couche de silicium située par rapport à la couche oxydée enterrée 7 du côté opposé à la métallisation 5.

Cette opération est réalisée, par exemple, par attaque chimique, la couche oxydée enterrée 7 ayant pour fonction de stopper sélectivement cette gravure. On notera que la couche d'arrêt que constitue cette couche enterrée permet ainsi de réaliser la gravure du silicium avec une grande précision qu'il ne serait pas possible d'atteindre pour une telle épaisseur avec du silicium pur. L'utilisation de tranches de silicium à oxyde intégré (SOI) permet quant à elle d'atteindre la précision requise pour la réalisation de la membrane 1.

L'étape suivante consiste (figure 3e) à ouvrir, par photolithographie et attaque chimique, une fenêtre dans la couche oxydée 7, au droit de l'évidement 2a et à graver par attaque chimique le silicium non oxydé ainsi découvert, sur une épaisseur de 20 μm. Cette épaisseur est très bien contrôlée car l'attaque chimique est bloquée par la couche de dopage p+ préalablement obtenue.

Le composant obtenu à l'issue de ces premières étapes présente de nombreux avantages.

Notamment, il présente une membrane 1 métallisée de faible épaisseur (3 μm). Du fait de cette faible épaisseur, la tension mécanique sur cette membrane est faible (45 N/m).

En outre, les portions non gravées de la couche oxydée définissent une surface de référence d'une grande précision, qui, comme on le verra plus loin de façon plus détaillée, est utilisée pour l'assemblage d'une seconde électrode.

Egalement, étant donné que la membrane 1 est dégagée par une dernière étape de gravure qui n'intervient que sur une très faible épaisseur, il est possible d'envisager pour la membrane des formes très variées, sans être limité par les effets anisotropes de l'attaque chimique dans les milieux cristallins.

Comme on le voit sur la figure 3e, la membrane 1 ainsi obtenue à l'issue de ces premières étapes n'est pas plane, mais est aspirée dans l'évidement 2a en raison de la différence de pression entre les deux faces de cette membrane 1.

La pression atmosphérique est rétablie de part et d'autre de la membrane 1 en ménageant une ouverture de petite dimension (non représentée) dans l'épaisseur de la lame de verre 2 (figure 3f). Cette ouverture est en outre utilisée pour introduire un contact électrique sur la couche d'ITO servant de contre-électrode.

Enfin, dans une dernière étape (figure 3g), on assemble sur le composant ainsi obtenu, par soudure ionique verre/silicium, la lame 3 préalablement préparée qui porte le réseau d'électrodes 3b.

La préparation de la lame 3 se fait, sensiblement de la même façon que pour la lame 2, en réalisant une gravure chimique, sur une épaisseur qui est typiquement de l'ordre de 50μm, puis en déposant un réseau d'électrodes 3b dans le fond de l'évidement 3a ainsi formé.

On notera que la lame 3 n'a pas besoin d'être transparente et pourrait être en tout autre matériau que le verre et notamment en tout autre matériau électriquement isolant.

Néanmoins, un substrat en verre offre l'avantage d'un assemblage par soudure ionique éprouvé.

Le réseau d'électrodes 3b est réalisé par dépôt sous vide d'une couche métallique (Aluminium par exemple). Cette couche est ensuite masquée, puis gravée chimiquement par lithographie.

On notera que les électrodes 3b ne présentent pas des dimensions et géométries uniformes mais sont optimisées en fonction des déformées de base que le miroir doit pouvoir subir.

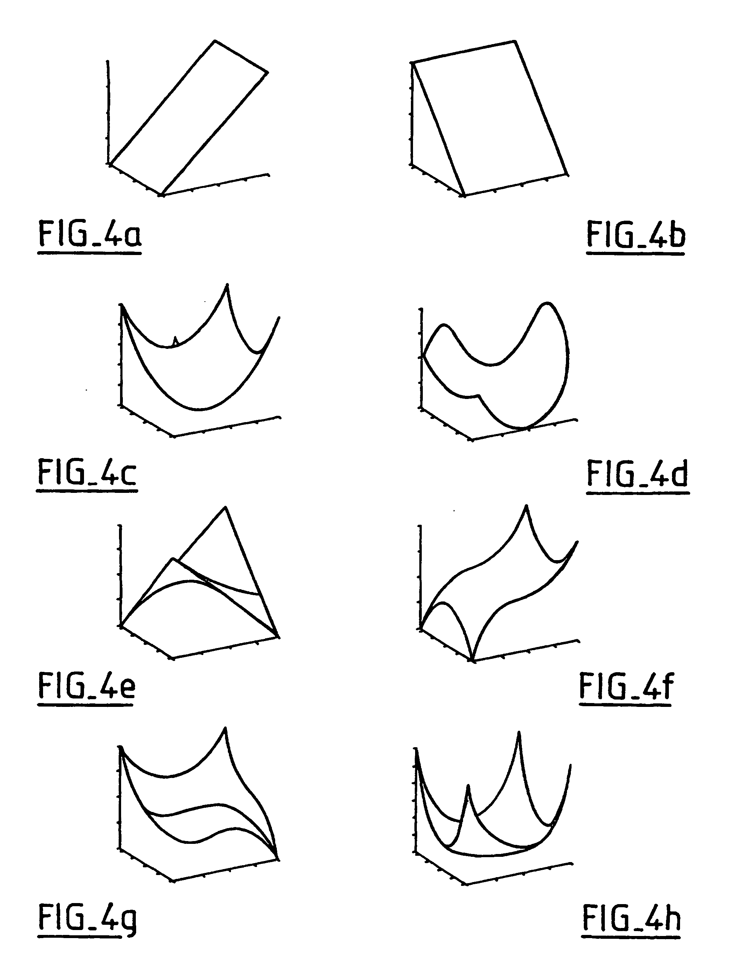

Ces déformées de base sont par exemple du type de celles illustrées sur les figures 4a à 4h : basculement autour d'un côté (figures 4a et 4b), courbure (figure 4c), astigmatisme à 0° ou 45° (figures 4d et 4e), déformée de type "coma" (figures 4f et 4g), aberration sphérique (figure 4h).

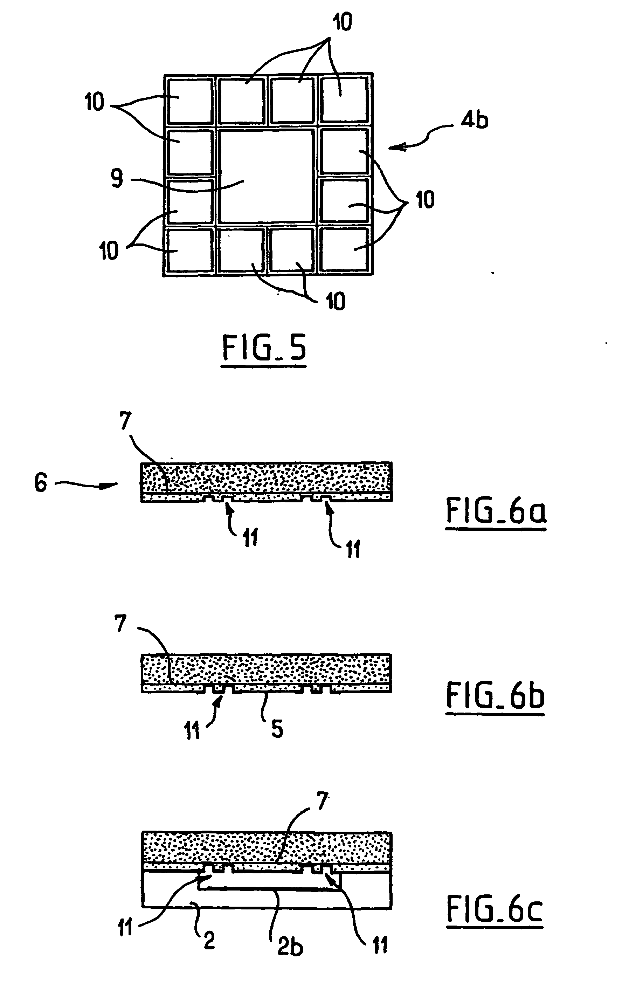

A titre d'exemple, dans le cas d'un miroir de forme carrée, un réseau d'électrodes optimisé est du type de celui représenté sur la figure 5 : il comporte une électrode 9 centrale de forme carrée, entourée de douze électrodes périphériques 10, également de forme carrée, dont la longueur de côté est égale à la demi-longueur de côté de l'électrode centrale 9.

Par ailleurs, du fait de la faible tension mécanique des membranes de silicium ((45N/m) par rapport à celle des membranes en nitrure de silicium (520 N/m)), les tensions de commande appliquées entre l'électrode 2b et le réseau d'électrodes 3b sont très sensiblement diminuées par rapport à celles nécessaires pour les composants à base de nitrure de silicium. Des tensions de 100 V sont suffisantes pour obtenir des déformées de quelques micromètres, à comparer à des tensions de 250 V pour les composants à base de nitrure de silicium.

Outre l'avantage de simplifier la commande électrique, les membranes silicium permettent d'envisager des déformées de plus grandes amplitudes pour des applications plus contraignantes. Il est en effet envisageable, en appliquant des tensions de commande comparables à celles utilisées avec des membranes en nitrure de silicium (250 V) d'obtenir des déformées ayant des amplitudes supérieures (> 10 μm).

Les composants qui viennent d'être décrits peuvent avantageusement être complétés de la façon suivante.

Pour réduire les interférences parasites entre la surface réfléchissante de la métallisation 5 et l'électrode transparente 2b en ITO, ladite électrode 2b est avantageusement recouverte par une couche anti-reflet.

Par ailleurs, il peut être avantageusement prévu dans le procédé de réalisation une étape consistant à graver un soufflet à la périphérie de la membrane 1.

En effet, si l'utilisation d'une membrane de silicium fine tendue (d'une épaisseur de l'ordre de 3μm) offre, entre autres, l'avantage de contraintes mécaniques faibles, la périphérie de la membrane est rigidifiée par la structure qui la supporte. Un soufflet de forme générale circulaire permet de réduire cette rigidité.

Ainsi que l'illustre les figures 6a à 6c, cette gravure d'un soufflet est par exemple réalisée avant l'étape de dopage et de dépôt de métallisation sur la tranche de SOI. Le soufflet est par exemple constitué par un ou plusieurs sillons circulaires 11 gravés sur une épaisseur de silicium de 20 μm.

En variante encore, les électrodes du réseau 3b peuvent être remplacées par une électrode unique commandée optiquement.

Une telle solution permet en effet de simplifier de façon encore accrue l'électronique de commande ; elle permet en outre d'avoir accès à des déformées plus complexes.

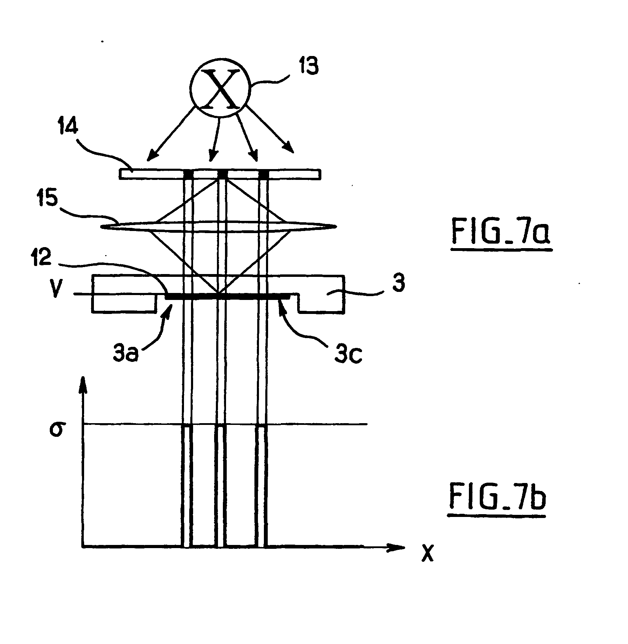

Cette solution optique est illustrée sur les figures 7a et 7b.

L'électrode unique (d'ITO par exemple) - référencée par 3c - est déposée dans le fond de l'évidement 3a de la lame 3, sur une couche de matériau photo-conducteur 12 à laquelle elle est ainsi couplée.

Une source lumineuse 13, par exemple une lampe incandescente, éclaire un masque 14 à travers un diffuseur. Ce masque 14 est représentatif de la répartition et la forme du champ électrostatique que l'on désire créer sur la membrane en silicium. L'image de ce masque est projetée par une lentille 15 sur la lame 3 en verre supportant l'électrode 3c.

Le photoconducteur peut être une couche minérale (par exemple un oxyde de bismuth de silicium $Bi_{12}SiO_{20}$) ou une couche organique (par exemple du polyvinyl carbozole PVK).

Le couple électrode-photoconducteur fonctionne de la façon suivante :

- en l'absence de lumière : la tension appliquée sur l'électrode en ITO n'est pas influente sur la membrane Si car le photoconducteur est dans un état isolant,
- aux points éclairés, la tension appliquée sur l'électrode en ITO est transmise sur la face externe du photoconducteur car celui-ci devient conducteur. La force électrostatique est ainsi appliquée à la membrane qui se déforme.

La conductivité spatiale du photoconducteur s'écrit :

$$\sigma(x,y) = \sigma 0 + I(x,y)$$

avec
$\sigma 0$ = conductivité du photoconducteur dans l'obscurité.
$\sigma(x,y)$ = conductivité du photodétecteur sous illumination à l'ordonnée (x,y),
$I(x, y)$ = éclairement au point (x,y).

Cette conductivité présente alors une répartition du type de celle illustrée sur la figure 7b

La faible épaisseur (1 μm à quelques micromètres) de la couche photoconductrice 12 permet de conserver une excellente résolution spatiale. La répartition spatiale de la tension électrique est reproduite fidèlement à partir de la répartition spatiale de l'intensité lumineuse incidente.

On notera que si cette électrode commandable optiquement nécessite un système d'adressage optique supplémentaire, qui peut ne pas être accepté pour certaines applications, cette approche peut être utilisée, en option, pour les applications nécessitant la génération de déformées complexes ne pouvant pas être obtenues avec un simple réseau d'électrodes.

Ce concept permet aussi la génération d'un profil continu du champ de forces électrostatiques. Pour cela, il suffit de choisir un masque dont la transparence n'est pas binaire mais à N niveaux de gris. A la limite, la transparence du masque peut être analogique avec une variation continue de son opacité. D'autre part, le masque peut avoir une fonction dynamique de la transparence. Au lieu d'utiliser un masque où la transparence spatiale est figée une fois pour toutes, on peut, pour certaines applications, utiliser un masque dynamique dont la fonction de transfert évolue temporellement..

Cette spécificité peut être mise à profit pour des applications nécessitant la génération de déformées dynamiques reproduisant une séquence dont les fonctions de transfert, spatiale et temporelle, sont enregistrées au préalable.

Une autre variante de la commande électrique peut être envisagée dans le cas où il est nécessaire d'accroître le nombre d'électrodes du réseau 3b. Si ce nombre d'électrodes est élevé, par exemple de l'ordre de 100 ou supérieur, outre la complexité de la commande électrique, se pose le problème de l'accès aux différents plots. Ce problème est bien connu en particulier par les concepteurs d'écrans plats à cristaux liquides pour la visualisation. L'accès matriciel pour adresser chaque point de coordonnée X, Y peut utiliser des lignes et des colonnes, chacune étant alimentée par des tensions : +V/2, -V/2 ou 0. Mais ce principe, outre le fait qu'il nécessite un effet de seuil qui n'existe pas dans l'application aux membranes à déformation électrostatique, n'est pas compatible avec un grand nombre d'électrodes. En effet, en absence d'un effet mémoire, la tension de commande ne peut être appliquée que sur une ligne à la fois. Dans le cas de la visualisation, un artifice consiste à multiplexer temporellement la commande électrique. Ceci n'est pas trop gênant pour l'observateur, qui intègre temporellement les images de chaque ligne grâce à la rémanence rétinienne.

Une approche consiste à créer une mémoire locale attachée à chaque point (pixel pour la visualisation, électrode zonale pour le MMA). On peut à cet effet utiliser des matrices de commande du type de celles utilisées dans le domaine des écrans plats et notamment des matrices de commande utilisant la technologie TFT (Thin Film Transistor).

## Revendications

1. Procédé pour la réalisation d'un miroir à membrane déformable, **caractérisé en ce qu'**il comprend les différentes étapes suivantes :

   - dopage de la face d'une tranche de silicium à couche oxydée intégrée (SOi) disposée du côté de la couche enterrée de ladite tranche,
   - métallisation de ladite face,
   - assemblage sur le composant ainsi obtenu d'une première portion de substrat transparente, présentant un évidement au fond duquel est disposée au moins une première électrode,
   - gravure jusqu'à la couche oxydée de la couche de silicium la plus éloignée de ladite première portion de substrat ainsi rapportée,
   - photo-lithographie et attaque chimique de la couche oxydée au droit de l'évidement de ladite première portion de substrat, puis gravure du silicium au droit de l'ouverture ainsi réalisée,
   - assemblage sur le composant ainsi obtenu d'une deuxième portion de substrat présentant un évidement au fond duquel est disposée au moins une deuxième électrode.

2. Procédé selon la revendication 1, **caractérisé en ce que** ladite première et deuxième portion de substrat sont réalisées par gravure d'une tranche de silicium avec couche d'oxyde enterrée.

3. Procédé selon l'une des revendications précédentes, **caractérisé en ce qu'**on perce une ouverture à travers ladite première portion de substrat avant l'assemblage de ladite deuxième portion de substrat.

4. Procédé selon l'une des revendications précédentes, **caractérisé en ce qu'**une portion de substrat est une lame en verre et **en ce que** son assemblage se fait par soudure anodique verre/silicium.

5. Procédé selon l'une des revendications précédentes, **caractérisé en ce que** le dopage est de type P+.

6. Procédé selon l'une des revendications précédentes, **caractérisé en ce que** la tranche de silicium à couche oxydée intégrée présente une épaisseur de l'ordre de 520 μm et une couche oxydée enterrée d'une épaisseur de 0,5 μm, située à une profondeur de 20 μm.

7. Miroir à membrane déformable comportant une membrane de silicium dont au moins une face est métallisée, ce substrat (2, 3) présentant deux évidements (2a, 3a) refermés l'un sur l'autre de part et d'autre de la membrane métallisée (1), ledit miroir comportant également au moins deux électrodes (2b, 3b) pour la commande de la déformation de la membrane, ces deux électrodes étant disposées de part et d'autre de la membrane sur les portions qui définissent les fonds des évidements (2a, 3a), celle de ces portions qui est directement en regard de la face métallisée de la membrane (1) étant transparente, **caractérisé en ce que** la membrane de silicium est maintenue au moyen de deux parties plus épaisses de couches de silicium d'un substrat en silicium à couche oxydée intégrée (SOi).

8. Miroir selon la revendication 7, **caractérisé en ce**

qu'une électrode de commande (2a) portée par ladite portion est une électrode transparente.

9. Miroir selon la revendication 8, **caractérisé en ce que** la membrane (1) est d'une épaisseur de l'ordre de 3 μm ou inférieure.

10. Miroir selon l'une des revendications 7 à 9, **caractérisé en ce qu'**une portion (2) de substrat qui porte une électrode transparente est une lame en verre.

11. Miroir selon l'une des revendications 7 à 10, **caractérisé en ce qu'**une électrode transparente (2a) est en oxyde d'indium et d'étain (ITO).

12. Miroir selon l'une des revendications 7 à 11, **caractérisé en ce qu'**une électrode transparente (2a) est recouverte par une couche anti-reflet.

13. Miroir selon l'une des revendications 7 à 12, **caractérisé en ce qu'**un soufflet (11) est gravé à la périphérie de la membrane.

14. Miroir selon l'une des revendications 7 à 13, **caractérisé en ce qu'**une portion de fond du côté opposé à la face métallisée (5) de la membrane (1) porte un empilement monolithique qui comprend une électrode transparente (3b) et une couche de photoconducteur (12), ledit empilement étant apte à être commandé de façon optique pour générer sur la membrane un champ électrostatique de profil complexe alors que les électrodes de part et d'autre de la membrane sont alimentées par une source d'alimentation unique.

15. Miroir selon l'une des revendications 7 à 14, **caractérisé en ce que** le fond directement en regard d'une face métallisée (5) de la membrane (1) présente quant à lui une électrode unique (2b) s'étendant de façon uniforme sur sa surface, tandis que le fond d'un évidement opposé à une face métallisée (5) de la membrane (1) porte un réseau d'électrodes (2a).

16. Miroir selon la revendication 15, **caractérisé en ce que** les électrodes (2b) du réseau ne sont pas uniformes leur nombre et répartition étant optimisés afin de simplifier l'adressage de la membrane tout en permettant de générer sur la membrane les principales déformées géométriques que sont les déformées piston, tilt, sphérique, astigmatisme, coma.

17. Miroir selon la revendication 16, **caractérisé en ce que** le réseau d'électrodes comporte une électrode centrale (9) de forme carrée entourée de douze électrodes périphériques (10) également de forme carrée.

18. Miroir selon l'une des revendications 15 à 17, **caractérisé en ce qu'**il comporte des moyens pour multiplexer temporellement les commandes des différentes électrodes

19. Miroir selon la revendication 18, **caractérisé en ce que** les moyens de multiplexage temporel comportent un réseau bi-dimensionnel de transistors de type TFT.

**Patentansprüche**

1. Verfahren zur Realisierung eines Spiegels mit deformierbarer Membran, **dadurch gekennzeichnet, daß** es die folgenden verschiedenen Schritte umfaßt:

   - Dotierung der Fläche einer Siliziumscheibe mit integrierter oxidierter Schicht (SOi), die sich auf der Seite der vergrabenen Schicht der Scheibe befindet,
     Metallisierung der Fläche,
   - Montage, auf dem so erhaltenen Bauelement, eines transparenten ersten Substratteils, das eine Aushöhlung hat, auf deren Boden wenigstens eine erste Elektrode angeordnet ist,
   - Gravur der Siliziumschicht, die am weitesten entfernt vom so aufgesetzten ersten Substratteil liegt, bis zur oxidierten Schicht,
   - Fotolitographie und chemische Bearbeitung der oxidierten Schicht auf der Außenseite der Aushöhlung des ersten Substratteils, danach Gravur des Siliziums auf der Außenseite der so realisierten Öffnung,
   - Montage, auf dem so erhaltenen Bauelement, eines zweiten Substratteils, das eine Aushöhlung hat, auf deren Boden wenigstens eine zweite Elektrode angeordnet ist.

2. Verfahren nach Anspruch 1, **dadurch gekennzeichnet, daß** das erste und zweite Substratteil mittels Gravur einer Siliziumscheibe mit vergrabener Oxydschicht realisiert sind.

3. Verfahren nach einem der vorhergehenden Ansprüche, **dadurch gekennzeichnet, daß** vor der Montage des zweiten Substratteils durch das erste Substratteil eine Öffnung gebohrt wird.

4. Verfahren nach einem der vorhergehenden Ansprüche, **dadurch gekennzeichnet, daß** ein Substratteil ein Glasplättchen ist und **dadurch**, daß seine Montage mittels anodischem Glas/Silizium-Bonden ausgeführt wird.

5. Verfahren nach einem der vorhergehenden Ansprüche, **dadurch gekennzeichnet, daß** die Dotierung vom P+ Typ ist.

6. Verfahren nach einem der vorhergehenden Ansprüche, **dadurch gekennzeichnet, daß** die Siliziumscheibe mit integrierter oxidierter Schicht folgendes aufweist: eine Dicke in der Größenordnung von 520 µm und eine vergrabene oxidierte Schicht mit einer Dicke von 0,5 µm, die sich in einer Tiefe von 20 µm befindet.

7. Spiegel mit deformierbarer Membran, der eine Siliziummembran umfaßt, von der wenigstens eine Seite metallisiert ist, wobei das Substrat (2, 3) zwei Aushöhlungen (2a, 3a) hat, die sich aufeinander zu beiden Seiten der metallisierten Membran (1) schließen, wobei der Spiegel außerdem wenigstens zwei Elektroden (2b, 3b) zur Steuerung der Membrandeformation umfaßt, wobei diese beiden Elektroden auf beiden Seiten der Membran auf den Teilen, die die Böden der Aushöhlungen (2a, 3a) bilden, angeordnet sind, wobei dasjenige der Teile, das sich direkt gegenüber der metallisierten Fläche der Membran (1) befindet, transparent ist, **dadurch gekennzeichnet, daß** die Siliziummembran mittels zweier dickerer Siliziumschichtabschnitte eines Substrats aus Silizium mit integrierter oxidierter Schicht (SOi) gehalten wird.

8. Spiegel nach Anspruch 7, **dadurch gekennzeichnet, daß** eine Steuerelektrode (2a), die von dem Teil getragen wird, eine transparente Elektrode ist.

9. Spiegel nach Anspruch 8, **dadurch gekennzeichnet, daß** die Membran (1) eine Dicke in der Größenordnung von 3 µm oder weniger hat.

10. Spiegel nach einem der Ansprüche 7 bis 9, **dadurch gekennzeichnet, daß** ein Substratteil (2), das eine transparente Elektrode trägt, ein Glasplättchen ist.

11. Spiegel nach einem der Ansprüche 7 bis 10, **dadurch gekennzeichnet, daß** eine transparente Elektrode (2a) aus Indium-Zinn-Oxid (ITO) besteht.

12. Spiegel nach einem der Ansprüche 7 bis 11, **dadurch gekennzeichnet, daß** eine transparente Elektrode (2a) mit einer antireflektierenden Schicht abgedeckt ist.

13. Spiegel nach einem der Ansprüche 7 bis 12, **dadurch gekennzeichnet, daß** am Rand der Membran ein Faltenbalg (11) eingraviert ist.

14. Spiegel nach einem der Ansprüche 7 bis 13, **dadurch gekennzeichnet, daß** ein Bodenteil auf der Seite, die der metallisierten Fläche (5) der Membran (1) gegenüberliegt, einen monolithischen Stapel trägt, der eine transparente Elektrode (3b) und eine fotoleitfähige Schicht (12) umfaßt, wobei der Stapel dafür eingerichtet ist, optisch gesteuert zu werden, um auf der Membran ein elektrostatisches Feld mit komplexem Profil zu erzeugen, wohingegen die Elektroden auf beiden Seiten der Membran aus einer einzigen Versorgungsquelle versorgt werden.

15. Spiegel nach einem der Ansprüche 7 bis 14, **dadurch gekennzeichnet, daß** der einer metallisierten Fläche (5) der Membran (1) direkt gegenüberliegende Boden eine einzige Elektrode (2b) hat, die sich gleichförmig auf seiner Oberfläche erstreckt, während der Boden einer Aushöhlung, die auf der entgegengesetzten Seite einer metallisierten Fläche (5) der Membran (1) liegt, ein Elektrodengitter (2a) trägt.

16. Spiegel nach Anspruch 15, **dadurch gekennzeichnet, daß** die Elektroden (2b) des Gitters nicht gleichförmig sind, wobei ihre Anzahl und Verteilung dafür optimiert ist, die Adressierung der Membran zu vereinfachen und es gleichzeitig zu gestatten, auf der Membran die geometrischen Hauptdeformationen zu erzeugen, die die folgenden sind: Kolben-, Tilt-, Kugel-, Astigmatismus-, Koma-Deformation.

17. Spiegel nach Anspruch 16, **dadurch gekennzeichnet, daß** das Elektrodengitter eine quadratische Zentralelektrode (9) umfaßt, die von zwölf ebenfalls quadratischen Randelektroden (10) umgeben ist.

18. Spiegel nach einem der Ansprüche 15 bis 17, **dadurch gekennzeichnet, daß** er Mittel umfaßt, um die Steuerbefehle verschiedener Elektroden zeitlich zu multiplexen.

19. Spiegel nach Anspruch 18, **dadurch gekennzeichnet, daß** die zeitlichen Multiplexmittel ein zweidimensionales Gitter aus Transistoren vom TFT-Typ umfassen.

**Claims**

1. Process for the production of a mirror with a deformable membrane, **characterized in that** it comprises the following various steps:

   - doping of that face of a silicon wafer with an integrated oxidized layer or silicon-on-insulator (SOI) wafer lying on the same side as the buried layer of the said wafer;
   - metallization of the said face;
   - bonding, to the component thus obtained, of a transparent first substrate portion having a recess, at the bottom of which at least a first electrode is placed;

- etching down to the oxidized layer of the silicon wafer furthest away from the said first substrate portion thus attached;

- photolithography and chemical etching of the oxidized layer in line with the recess of the said first substrate portion followed by etching of the silicon in line with the aperture thus produced; and

- bonding, to the component thus obtained, of a second substrate portion having a recess, at the bottom of which at least a second electrode is placed.

2. Process according to Claim 1, **characterized in that** the said first and second substrate portions are produced by etching a silicon wafer with a buried oxide layer.

3. Process according to one of the preceding claims, **characterized in that** an aperture is drilled through the said first substrate portion before the bonding of the said second substrate portion.

4. Process according to one of the preceding claims, **characterized in that** one substrate portion is a glass plate and **in that** it is bonded by glass/silicon anodic welding.

5. Process according to one of the preceding claims, **characterized in that** the doping is of the p+ type.

6. Process according to one of the preceding claims, **characterized in that** the silicon-on-insulator wafer has a thickness of around 520 μm with a buried oxidized layer having a thickness of 0.5 μm, located at a depth of 20 μm.

7. Mirror with a deformable membrane, comprising a silicon membrane, at least one face of which is metallized, this substrate (2, 3) having two recesses (2a, 3a) closed off from one another on either side of the metallized membrane (1), the said mirror also including at least two electrodes (2b, 3b) for controlling the deformation of the membrane, these two electrodes being placed on either side of the membrane on the portions that define the bottoms of the recesses (2a, 3a), that one of these portions which is directly opposite the metallized face of the membrane (1) being transparent, **characterized in that** the silicon membrane is held in place by means of two thicker parts of silicon layers of a silicon-on-insulator (SOI) substrate.

8. Mirror according to Claim 7, **characterized in that** a control electrode (2a) carried by the said portion is a transparent electrode.

9. Mirror according to Claim 8, **characterized in that** the membrane (1) has a thickness of around 3 μm or less.

10. Mirror according to one of Claims 7 to 9, **characterized in that** a substrate portion (2) carrying a transparent electrode is a glass plate.

11. Mirror according to one of Claims 7 to 10, **characterized in that** a transparent electrode (2a) is made of indium tin oxide (ITO).

12. Mirror according to one of Claims 7 to 11, **characterized in that** a transparent electrode (2a) is covered with an antireflection layer.

13. Mirror according to one of Claims 7 to 12, **characterized in that** a bellows (11) is etched on the periphery of the membrane.

14. Mirror according to one of Claims 7 to 13, **characterized in that** a bottom portion of the opposite side from the metallized face (5) of the membrane (1) carries a monolithic stack comprising a transparent electrode (3b) and a photoconductive layer (12), the said stack being able to be controlled optically in order to generate, on the membrane, an electrostatic field of complex profile when the electrodes on either side of the membrane are supplied by a single supply source.

15. Mirror according to one of Claims 7 to 14, **characterized in that** the bottom directly facing a metallized face (5) of the membrane (1) itself has a single electrode (2b) extending uniformly over its surface, whereas the bottom of a recess opposite a metallized face (5) of the membrane (1) carries an array of electrodes (2a).

16. Mirror according to Claim 15, **characterized in that** the electrodes (2b) of the array are not uniform, their number and their distribution being optimized so as to simplify the addressing of the membrane, while still making it possible to generate, in the membrane, the principal geometrical deformation modes, namely the piston, tilt, spherical, astigmatism and coma deformation modes.

17. Mirror according to Claim 16, **characterized in that** the array of electrodes includes a central electrode (9) of square shape surrounded by twelve peripheral electrodes (10) likewise of square shape.

18. Mirror according to one of Claims 15 to 17, **characterized in that** it includes means for temporally multiplexing the control signals for the various electrodes.

**19.** Mirror according to Claim 18, **characterized in that** the temporal multiplexing means comprise a two-dimensional array of TFT-type transistors.

FIG.1

FIG.2

FIG.3a

FIG.3b

FIG.3c

FIG.3d

FIG.3e

FIG.3f

FIG.3g

FIG_4a

FIG_4b

FIG_4c

FIG_4d

FIG_4e

FIG_4f

FIG_4g

FIG_4h

FIG.5

FIG.6a

FIG.6b

FIG.6c

FIG. 7a

FIG. 7b